# EUROPEAN PATENT APPLICATION

(11) **EP 1 004 651 A1**
(43) Date of publication of application: **31.05.2000**
(21) Application number: 98917701.9
(22) Date of filing: 27.04.1998
(51) Int. Cl.: C09K 21/02, B32B 9/00, C04B 28/26, C09J 1/02, E04B 1/94

(54) **REFRACTORY LIQUID AND METHOD OF MANUFACTURING THE SAME, AND REFRACTORY MATERIAL, REFRACTORY BUILDING MATERIAL AND REFRACTORY ADHESIVE EACH MANUFACTURED FROM THE REFRACTORY LIQUID**

(71) Applicant: Kyoei Corporation, Yokohama-shi, Kanagawa 230-0031 (JP)
(72) Inventor: ISHIKAWA, Kazuo, Yokohama-shi, Kanagawa 230-0031 (JP)
(74) Representative: Lamb, Martin John Carstairs
(86) International application number: JP9801932
(87) International publication number: WO9955798

(57) **Abstract**

A refractory liquid formed by subjecting powdered or granular potassium hydroxide, powdered or granular sodium carbonate (soda ash), mass of metal silicon and water to a reaction, and a method of manufacturing the same. A refractory material obtained by mixing one or a plurality of kinds of materials selected from paper, rice hulls, fibrous materials, wood chips and sawdust with the refractory liquid, dehydrating the resultant mixture, and then pressure molding the product. A refractory building material obtained by coating one or both surfaces of a wooden plate, a paper plate, a metal plate or a synthetic plate with a viscous liquid produced by mixing bentonite and fibers with the refractory liquid, and then molding the product. A refractory building material obtained by bonding a noninflammable cotton plate to a base plate via a mixture formed by adding bentonite and Chinese cotton to the refractory liquid, and then molding the product. A refractory adhesive formed by adding bentonite, Chinese cotton and Bengal (31) to the refractory liquid, and mixing and agitating the product.

## Description

### FIELD OF THE INVENTION

The present invention relates generally to an inorganic reactive product, and more particularly to a fire resistant liquid and a process for preparing the same, and fire resistant materials, fireproof building materials and fire resistant adhesives that may be provided by using such fire resistant liquid. More specifically, the present invention relates fire resistant materials that may be utilized as structural building materials, structural fittings, members for manufacturing furniture such as desks, chairs and the like, the chassis for home electric products such as refrigerators, television sets and the like, and package materials; fireproof building materials that exhibit excellent for noise and heat insulation as well as fireproofing capability; and fire resistant adhesives that provide excellent for fire resistance.

### PRIOR ART

It is known from Japanese patent application No. H1(1985)―314157 that fire resistant composites may be produced by allowing inorganic materials to react. It is also known that tiles, asbestos, and rock wool may be used as the interior or exterior fining materials because of their excellent fire resistance properties. Foamed synthetic resins, fiber boards, asbestos, and rock wool are also known as the good noise insulating materials, and water glass is known as the fire resistant adhesive.

The above-mentioned fire resistant composites are manufactured by using many different types of materials, which may produce harmful gases during the reaction process in which they are produced.

Some of the conventional materials mentioned above which are superior in fire resistance, have poor noise insulation, while others which are superior in noise insulation, have poor fire resistance. For asbestos and rock wool, for example, they are excellent in good fire resistance and noise insulation, but their usage is restricted because the dusts produced from them have the undesirable effect on the human body or health. Furthermore, available fire resistant adhesives, which may be used for producing the laminated building materials by molding, have not been proposed as yet.

Certain synthetic resins, which are typically used for making various interior and exterior fitting articles, have the extremely low fire resistance, and may potentially produce the harmful gases when they are burned. Thus, those synthetic resins are not suitable for use as the building materials.

Concrete, reinforced steels, and steel frames are widely used as the building structural units, but they have the problem in that their mechanical strength may decrease rapidly when they are exposed to fire flames, in the event that fire occurs. Different types of adhesives or joint sealant are known, but they are inferior in fire resistance.

It is desirable that the fire resistant materials have certain mechanical strength as well as fire resistance, heat resistance and noise insulation and fit for processing such as cuffing and further the fire resistant materials may be utilized for various kinds of applications not only structural building materials but also structural fittings, members for manufacturing pieces of furniture such as desks, chairs and the like, the chassis for home electric products such as refrigerators, television sets and the like, and the packaging materials that may replace the conventional corrugated cardboard and styrene foam. Unfortunately, such fire resistant materials have not been proposed as yet.

### SUMMARY OF THE INVENTION

The present invention solves the above-described problems by obtaining a water-soluble, fire resistant liquid that allowing potassium hydroxide, sodium carbonate, metal silicon and water to react.

Specifically, fire resistant liquid of the present invention may be obtained by allowing the components of potassium hydroxide, sodium carbonate, metal silicon and water to react. During the reaction process, potassium hydroxide may be used in powdery or granular forms, sodium carbonate may be used in powdery or granular forms, and metal silicon may be used in lump forms. The fire resistant liquid may be spontaneously produced in the reaction vessel, if potassium hydroxide in powdery or granular forms, the sodium carbonate in powdery or granular forms, the metal silicon in lump forms and the water are placed into the reaction vessel in that sequence.

The reaction may take place between two (2) and ten (10) hours. This reaction time may be shorter if the amount of potassium hydroxide and other components to be given is decreased, while the reaction time may be longer if the above amount is increased. The reaction time may be shortened further if water, which is previously heated up to from 40°C to 50°C, is added.

The sodium carbonate may preferably use anhydrous sodium carbonate (also known as "soda ash"). The potassium hydroxide in powdery or granular forms, the sodium carbonate in powdery or granular forms and the metal silicon in lump forms, which are commercially available may be used. Namely, all of commercial products of potassium hydroxide in powdery or granular forms, the sodium carbonate in powdery or granular forms and the metal silicon in lump can use this invention and the mesh sizes (diameter, etc.) of the powders, granules and lumps are not essential to this invention.

As described before, the fire resistant liquid according to the present invention may be obtained by allowing powdery or granular forms of potassium hydroxide, powdery or granular forms of sodium carbonate, lump forms of metal silicon and water to react each other for two (2) hours to ten (10) hours. The temperature of the reaction may raise between 60°C and 90°C. Because the fire resistant liquid that results from the reaction above is water-soluble, the concentration of the fire resistant liquid may be controlled freely by increasing or decreasing the amount of water to be added.

For example, in cases of fireproofing layer is formed from using fire resistant liquid alone, the amount (weight) of water to be added may preferably be about four times of the total weight of potassium hydroxide and sodium carbonate, in order to obtain relatively high concentration of fire resistant liquid. If the amount of water to be added may be less than above, such as 2.5 times of the total weight of potassium hydroxide and sodium carbonate, for example, a highly concentrated fire resistant liquid can be obtained. If the amount of water to be added is less than 2.5 times, it is not desirable that the reaction cannot proceed well.

On the other hand, when the fire resistant liquid is to be applied or sprayed alone, the amount (weight) of water to be added may preferably be about 4.4 times of the total weight of the potassium hydroxide and sodium carbonate, in order to obtain relatively low concentration of fire resistant liquid, for example. It is also possible to increase the amount of water more than 4.4 times. In this case, when the fire resistant liquid is mixed with any coating materials such as paint, the amount (weight) of water to be added may be about 4.7 times of the total weight of potassium hydroxide and sodium carbonate. If the concentration of the fire resistant liquid is too low, however, it might decrease the capability of fire resistant liquid. It may be seen from above that the amount (weight) of water to be added should preferably be at least 4.7 times of the total weight of potassium hydroxide and sodium carbonate.

By adding coke (about 10 % by weight) to the fire resistant liquid mentioned above, a glossy film may be formed after it is applied and dried. If casein (1% to 10 % by weight) is added to said fire resistant liquid, the resultant becomes insoluble in water. By adding 10 % by weight of coke and 10 % by weight of fluorine, the resultant may also become insoluble in water.

The present invention includes fire resistant liquid that may additionally contain one or more of papers, chaffs, fibrous materials, wood chips, and sawdust, from which a fire resistant material may be obtained by pressure molding. Thus, the present invention also proposes such fire resistant liquid and the process of manufacture of the same.

The mixture ratio of the fire resistant liquid and the other components as described above may preferably be such that the fire resistant liquid represents 5 to 15 % by weight and the other components represent 85 to 95 % by weight. If the proportion of the fire resistant liquid is less than 5 % by weight, it might decrease its capability of fire-resistant, which is not desirable. There would no noticeable difference in the capability of fire-resistant, even if the proportion is more than 15 % by weight. From the cost-to-performance considerations, therefore, the proportion of the fire resistant liquid should preferably at most 15 % by weight so that the industrial wastes, such as papers, chaffs, fibrous materials, wood chips, and sawdust, which are otherwise of no utility, may be utilized more effectively.

More specifically, the fire resistant material just described above may preferably be composed of 5 to 15 % by weight of fire resistant liquid, 75 to 85 % by weight of papers, 3 to 7 % of chaffs, and 3 to 7 % of fibrous materials. The reason why the proportion of the fire resistant liquid should range between at least 5 % and at most 15 % by weight has been explained above. For papers, the proportion being less than 75 % by weight would undesirably affect the flexibility of the finished product, while if it exceeds 85 % by weight, it would decrease the capability of fire-resistant, which is not desirable. For chaffs, the proportion being less than 3% by weight would undesirably affect the elasticity of the finished product that would become weaker, while if it exceeds 7 % by weight, it would be too strong in elasticity, which is not desirable. For fibrous materials, the proportion being less than 3 % by weight would undesirably affect the fire resistance and flexibility of the finished product that would become decreased, while it exceeds 7 % by weight, it would be too strong in flexibility, which is not desirable.

Note that the fire resistant material may also be obtained by only adding papers (85 % to 95 % by weight) to fire resistant liquid (5 % to 15 % by weight). If chaffs are added to just above mentioned mixture, it is desirable that it would be increased fireproofing and waterproofing of finished product and be controlled the flexibility of the finished product, because the component of (Si) contained in the chaffs contributes actively to the production of fire resistant material. When added, the fibrous materials will help minimize smoke when the finished product is burned. The fibrous materials may also be used to control the flexibility of the finished product. The finished product that contains the fibrous materials will produce the smoke about 80 % less than otherwise, when it is burned.

In the above description, papers may include scrapped papers such as scrapped newspapers, scrapped magazines, and the like. Those scrapped papers may be only to cut into pieces in order to uniform mixture containing fire resistant liquid and others. In this case, there is no need of removing any staples from the scrapped magazines, nor is there need of removing any printed ink. Since no additional treatments other than cutting are required for scrapped newspapers and magazines, fire resistant material is obtained by adding scraped papers to fire resistant liquid can be utilized effectively and meet the recycling needs.

The chaffs may be mixed in order to add silica component (Si) contained in the chaffs to fire resistant material in the present invention, so vegetable seeds, husks and others that contain silica component may also be used instead of chaffs.

The fibrous materials may include Chinese cottons, glass cottons, stainless steel cottons, ceramic cottons, rock wool, asbestos, cellulose fibers, ceramic fibers, and the like.

The fire resistant material of the present invention may be obtained by adding only chaffs to fire resistant liquid. In this case, the mixture may preferably contain 70 to 90 % by weight of chaffs and 10 to 30 % by weight of fire resistant liquid, in case of taking account strength and flexibility of finished product. The proportion of chaffs being below 70 % by weight would lower mechanical strength of product, which is not desirable. While above 90 % by weight would produce harder and less flexible product, which is not desirable. It may be appreciated from the foregoing description that it is sufficient to add more than 5 % by weight of fire resistant liquid in order to ensure fireproof of finished product.

The ratio of fire resistant liquid (10 to 30 % by weight) and chaffs (90 to 70 % by weight) may be appropriately changed at the condition of at least 5 % by weight of fire resistant liquid. By adding one or more of papers, fibrous materials, wood chips and sawdust may be added to fire resistant liquid and chaffs to above two components, fireproofing, incombustibility, smoke elimination, waterproofing, rigidity, flexibility, and elasticity and others can be varied accordingly.

The fire resistant material of the present invention may also be obtained by only adding wood chips to fire resistant liquid. In this case, the mixture may preferably contain 15 % to 35 % by weight of fire resistant liquid and 65 % to 85 % by weight of wood chips. The proportion of the wood chips being above 85 % by weight would produce heavier and harder product, which is not desirable in terms of the workability. Below 65 % by weight, it would affect the mechanical strength of the finished product. In this case, sawdust, withered leaves, fallen leaves, and/or cedar tree leaves may be used in place of, or in combination with, the wood chips. In any case, wood chips, sawdust, and others that are of no utility may be utilized effectively. Again, it is clear from the foregoing description that it is sufficient to add at least 5 % by weight of fire resistant liquid in order to ensure that the finished product is fireproof. The ratio of fire resistant liquid (15 to 35 % by weight) and wood chips and/or sawdust (65 % to 85 % by weight) may be appropriately changed at the condition of at least 5 % by weight of fire resistant liquid. By adding one or more of papers, chaffs, fibrous materials and sawdust may be added to fire resistant liquid and wood chips to above two components, fireproofing, incombustibility, smoke elimination, waterproofing, rigidity, flexibility, and elasticity and others can be varied accordingly.

As described above, the fire resistant material of this invention may be obtained from 5 % to 15 % by weight of fire resistant liquid and 85 % to 95 % by weight of additional components by mixing, dehydration, and pressure-molding. The fire resistant liquid may be obtained by allowing potassium hydroxide, sodium carbonate (soda ash), metal silicon, and water to react. The additional components contain one or more of papers, chaffs, fibrous material, wood chips, and sawdust that may be added selectively appropriate quantities in order to consider the particular function requirements for final product, such as fireproofing, incombustibility, smoke elimination, waterproofing, rigidity, flexibility, elasticity, light weight, hardness, and so on.

In the process of such fire resistant material according to the present invention, the process includes the steps of mixing fire resistant liquid together with one or more of papers, chaffs, fibrous materials, wood chips, and sawdust by means of a per-se known kneader, mixer or like, compressing resultant after mixing so that any water or moisture can be removed therefrom, and pressure molding resultant after compressing by hot press or extrusion.

The above process may include a step of boiling mixture at 100°C to 170°C for 30 min to 90 min between after mixing step and before dehydration step. The boiling step would accelerate the penetration of papers etc. by fire resistant liquid and then fire resistant liquid and other components may be mixed better. When the boiling step is added, workability of pressure molding step by press and so on may be fine. The final product thus obtained presents glossy surface and beautiful finish, as compared with without boiling step. The boiling temperature range (100°C to 170°C), as mentioned above, has been selected by considering the fact that below 100°C, the boiling step would take longer, while above 170°C, the boiling step would produce solids. Similarly, the boiling time period (30 min to 90 min), as mentioned above, has been selected by considering the fact that, shorter than 30 min of boiling time would not provide any expected effect (to help the liquid penetrate papers, etc.), while longer than 90 min, there would not be any substantial difference.

During the manufacturing process, the dehydrating step is intended to remove any extra water or moisture from the mixture before following pressure molding step, and to improve the finish of final product. The dehydrating step may be performed by heating and warming and so on. The dehydration after pressing, the fire resistant liquid can be achieved to save, because any extra water or liquid that has been squeezed from the mixture (including originally fire resistant liquid and fire resistant liquid contained the components, such as papers) may be reused during the subsequent steps. From the aspect of the workability in the pressure molding step so that final product can be finished fine, the removal of any extra water or liquid in the dehydrating step should preferably continue until 40 % to 50 % by weight of liquid ingredient in the mixture.

In cases where the pressure-molding is performed by hot press, it should preferably be done at 150°C to 180°C for 30 to 90 minutes. The pressure-molding step may occur by hot press, roll shaping, extrusion, or any other known molding techniques.

As described, the fire resistant material according to the present invention may be made by mixing fire resistant liquid obtained by allowing potassium hydroxide, sodium carbonate (soda ash), metal silicon and water to react and together with one or more of papers, chaffs, fibrous materials, wood chips and sawdust, and then by molding resultant after compressing by press. This molding may be performed by hot press, roll press or extrusion so that various shapes such as plates, columns, bars, and the like can be formed. Since the fire resistant materials after molding have fire resistance, certain mechanical strength and easy processing such as cutting, they have wide range of applications, including building material, fittings, furniture such as desks, chairs, etc., chassis for home electric units such as refrigerators, television sets, and the like, and packaging materials as substitute for conventional corrugated cardboard and styrene foam. Typical examples of using the fire resistant material may include the constituent parts of the air duct in the home kitchen that are usually made of stainless steel, box frames for beer bottles or cans, base frames for game machines such as pinball game machines (known as PACHINKO in Japan), and cartons (trays for bills and coins on the bank teller desks or at the shop).

It may be appreciated from the above description that fire resistant material according to the present invention may be used in place of wood, metals, synthetic resins and the like, and may be used to fabricate not only the parts or members so far made of wood, but also the parts or members so far made of metals or synthetic resins, which are required to be fireproofed.

Furthermore, the present invention includes fireproof building materials that may be obtained by mixing described fire resistant liquid together with vegetable particles, and then by molding the resultant mixture by pressure molding, preferably, by hot press at 180°C to 200°C and fireproof building materials that may be obtained by mixing described fire resistant liquid with bentonite and fibers to form a viscous liquid mixture, and then by applying the viscous liquid mixture on one or both of the opposite sides of the wood board, paper board, metal board, or synthetic board. For example, if veneer is produced by using fire resistant liquid of the invention, it is possible to produce a harmless veneer without having formalin that was used in case of manufacturing the conventional veneer.

By applying the above-described fire resistant liquid proposed by the present invention on one or both of the opposite sides of the wood board, synthetic resin board, composite board, paper board (such as pressure-molded paper board), or metal board, any of those boards may be utilized as fireproof building material. For the testing purposes, the fire resistant liquid of the present invention was applied onto the surface of a 5 mm to 10 mm thickness wood board until 1 to 3 mm thickness coating was formed thereon. Then, the wood board was dried for two to ten hours, after which the coating on the wood board was placed close to the flame of a gas burner at 1000°C. It was found that the wood board remained unburned for one to three minutes. For comparison, wood board (5 mm to 10 mm thickness), which includes no such coating but has the same quality as above wood board, was tested under the same conditions above. It was found that the non-inventive wood board was burned in 2 to 5 seconds.

Furthermore, the present invention includes fireproof building materials which may be produced by using the fire resistant liquid of the present invention have good fire resistance, noise insulation and heat insulation and further includes adhesives have good fire resistance and which may be produced by using the fire resistant liquid of the present invention have good fire resistance.

Specifically, such fireproof building materials that may be provided by bonding an incombustible cotton plate (blanket) to the base plate by using above mixture by adding bentonite and Chinese cotton fire resistant liquid of the present invention has both good fire resistance and noise insulation. In this case, papers, woods, glasses, metals or concrete boards may be used as base plate, and stainless steels or ceramic cottons may be used as the incombustible cotton plate. In summary, the base plate may include any combustible material boards such as papers, woods, synthetic, or glass boards, and any incombustible materials such as concrete, metal, or ceramic molded boards. The incombustible cotton may include metal cottons, rock cotton, asbestos, and glass cottons. Any other incombustible cottons, including fibers hard to burn at high temperatures and capable of retaining their original shapes at high temperatures, may also be used.

The fire resistant adhesive may be obtained by mixing bentonite, Chinese cotton and BENGEL 31 with fire resistant liquid of the present invention, and then by stirring them to provide a uniform mixture. Specifically, such fire resistant adhesive may be included fire resistant liquid as well as 50 % to 70 % by weight of bentonite, 0.5 % to 1.5 % by weight of Chinese cottons and 1 % to 2.5 % by weight of BENGEL 31, respectively, in relation to the amount of fire resistant liquid.

Alternatively, fire resistant adhesive may include fire, resistant liquid as well as 50 % to 70 % by weight of bentonite, 0.5 % to 1.5 % by weight of Chinese cotton, 1.0 % to 2.5 % by weight of BENGEL 31, 0.1 % to 0.3 % by weight of graphite, 0.05 % to 0.1 % by weight of carbon fibers, respectively, in relation to the amount of fire resistant liquid.

Those fire resistant adhesives may be used with sawdust, chaffs, cork chips, paper pieces and crashed synthetic resins (reclaimed wastes), thereby forming them to any board shapes. The boards thus formed, which include sawdust ,chaffs cork chips and others may provide both good noise insulation and hardness to burn.

If those fire resistant adhesives may also be used as adhesive at the time of manufacturing veneers, there is no need of using formalin, harmless veneers may be provided.

Additionally, in case of those fire resistant adhesives may be used with papers, fibers or sawdust that are capable of insulating noise well, thus provided paper, fiber, or sawdust boards have both good noise insulation and fire resistance.

The fire resistant adhesives described above may be used for any type of building materials, just like fire resistant liquids described before, but may also be used as a powerful bond for any type of building materials, including combustible or incombustible building materials.

The fire resistant adhesives including Chinese cottons and BENGEL 31 as described above, a fire resistant liquid may include graphite and carbon fibers instead of Chinese cotton and BENGEL 31 in the present invention may be used as fire resistant putty or joint sealant. When the fire resistant adhesives may be used as joint sealant, it is advantageous in that it will never crack or shrink in the event of fire, preventing the fire from extending any further.

The fire resistant liquid of the invention that has been described so far may be produced on massive production basis by simple process. The raw materials that are commercially available at low cost may be used, so the manufacturing costs can be minimized. The fire resistant liquid applied on one or both sides of combustible material such as wood boards, paper boards and others which are by nature easy to burn will become hard to burn or cannot burn easily.

The fire resistant liquid of the invention is water-soluble. The concentration of the fire resistant liquid to be produced may be controlled by increasing or decreasing the amount of water to be added. The fire resistant liquid will become glossy if some treatment is added to it. In addition, the fire resistant liquid will not produce any toxic gases, when it is heated.

By applying the fire resistant liquid or coating of any paint containing the fire resistant liquid to a specific thickness upon combustible base plate, and then by drying the coating, the base plate will become an incombustible building material. By attaching fire resistant materials such as metallic cottons to above building materials, they will become fireproof building materials having both good fire resistance and noise insulation.

The fire resistant materials according to the present invention have fire resistance, heat insulation and noise insulation as well as certain mechanical strength and easiness of being worked such as by cutting, and have wide range of applications, including not only building materials but also fittings, furniture such as desks, chairs and the like, chassis for home electric products such as refrigerators, television sets and the like, and packaging materials. The fire resistant materials in the present invention may be used not only for all items usually made of wood, but also for all items made of metal, synthetic resin and any other material that require the fireproofing.

The fire resistant materials according to the present invention may be manufactured by making use of papers, chaffs, fibrous materials, wood chips, and/or sawdust that are usually available at low cost. The present invention contributes greatly toward the reusing or recycling owing to make use of papers, chaffs, fibrous materials, wood chips, and/or sawdust.

If the fire resistant materials according to the present invention may be buried into earth, they will eventually form part of the earth in about ten years and never damage for human health.

The building materials according to the present invention will never produce any toxic gases, even if they are exposed at high temperatures in the event of fire. In that situation, therefore, it will save human lives and corporate or personal properties. Furthermore, the building materials according to the present invention may be good formation because of easily cutting such as saw and excellent for fireproof building material.

The fire resistant adhesives prepared by using fire resistant liquid of the present invention can effectively bond different materials together, and may also be used as putty or sealant for filling the joints.

### BRIEF DESCRIPTION OF THE DRAWINGS

Fig. 1 illustrates a partial sectional view of a fireproof building material according to one preferred embodiment of the present invention; and
Fig. 2 illustrates a partial sectional view of a fireproof building material according to another preferred embodiment of the present invention.

### BEST MODE OF EMBODYING THE INVENTION

### Example 1

8 kg of potassium hydroxide in granular forms, 7 kg of sodium carbonate (soda ash) in powdery forms (commercially available from ASAHI Glass Co., Ltd., Japan) and 30 kg of metal silicon in lump forms were placed into the reaction vessel in that sequence. Next 60 liters of water was added.

It was found that these components were allowed to react spontaneously in the reaction vessel, and the reaction began violently with potassium hydroxide located at the bottom layer and caused a convection currents to occur from bottom to top within the reaction vessel. The reaction temperature was rising as the reaction proceeds. The most active reaction occurred at the temperature range between 80°C and 90°C. In this example, reaction temperature stopped rising at 92°C.

The reaction was completed about ten hours. Then, any solids were separated, and about 48 liters (about 70 kg) of a fire resistant liquid was obtained.

The separated solids, which remained to be unused during the reaction, were mostly metal silicon lumps. About 22 kg of metal silicon lumps was obtained after cleaning by water. Then, about 8 kg of additional metal silicon lumps is added to residual metal silicon lumps, totaling 30 kg may be used for a subsequent (second-time) reaction.

8 kg of potassium hydroxide in granular forms, 7 kg of sodium carbonate (soda ash) in powdery forms, 22 kg of residual metal silicon in lump forms, 8 kg of additional metal silicon in lump forms and 60 liters of water are placed into reaction vessel in that sequence. Then, second time reaction begins.

In this example, it is noted that the most preferred way of producing the fire resistant liquid was to place the components into the reaction vessel in the sequence of potassium hydroxide in granular forms, sodium carbonate in powdery forms, metal silicon in lump forms, and finally water. This is presumably because the potassium hydroxide at the bottom begins to react firstly, which then causes the convection to occur actively from the bottom to the top.

In this example, the fire resistant liquid thus obtained had relatively high concentration. The fire resistant material coated fireproof layer can be obtained by applying this fire resistant liquid upon combustible plate such as wood board. It was found that this fire resistant material remained unburned for over 30 minutes when it was located close to the gas burner (1000°C).

Alternatively, it is possible to only increase the amount of water to 70 liters, for example, with the respective amount of other components remaining unchanged. In this case, the fire resistant liquid thus obtained will has relatively low concentration, as compared with the amount of water to 60 liters. By mixing 70 % by weight of this fire resistant liquid with 20 % by weight of commercial paint product and 10 % by weight of Chinese cotton, a fire resistant paint may be obtained, which may be applied to any interior fittings within building. If this fire resistant paint may be applied three to five times upon interior fittings until a coating layer of two to 3 mm thick is formed thereon, the fireproof walls that can protect any combustible material underneath from fire can thus be obtained.

In this case, as the amount of water to be added is increased, the amount of metal silicon that can remain to be unused during the reaction is increased accordingly. Increasing the amount of water up to 70 liters, with other components such as potassium hydroxide, sodium carbonate (soda ash) and metal silicon remaining unchanged or the same as this example, 25 kg of metal silicon lumps were remained to be unused.

### Example 2

3 kg of potassium hydroxide in powdery forms, 2 kg of sodium carbonate (soda ash) in granular forms, 15 kg of metal silicon in lump forms, and 20 kg of water were placed into the reaction vessel in that sequence, in which those components were allowed to react. The reaction temperature rose to between 80°C and 90°C, and the reaction process was completed about 2 to 5 hours. 22 kg to 26 kg of a fire resistant liquid was obtained.

All of metal silicon lumps were not used during reaction process, but some of them remained to be unused. Additional metal silicon lumps may be added to residual metal silicon lumps after cleaning by water, totaling 15 kg, which may be used for the subsequent (second-time) reaction process.

The fire resistant liquid thus obtained was aqueous solution having pH of 10 to 12.

A fire resistant paint for interior fittings may be obtained by mixing 70 % by weight of the above fire resistant liquid with 20 % by weight of any commercial paint and 10 % by weight of Chinese cotton. Although Chinese cotton may be omitted, it is prefer to include Chinese cotton in order to increase fire resistance capability.

If this fire resistant paint may be applied three to five times upon interior fittings until a coating layer of two to three mm thickness is formed thereon, the fireproof walls that can protect any combustible material underneath from fire may thus be obtained.

In this case, decreasing the amount of water to be added increases the viscosity of the resulting fire resistant liquid, whereas increasing the amount of water dilutes the resulting fire resistant liquid, which may conveniently be used as coating paint.

In this example, increasing the amount of water up to 24 liters, with other components such as potassium hydroxide, sodium carbonate (soda ash) and metal silicon remaining unchanged or the same as this example, obtained fire resistant liquid will be concentrated so adequately that it can be mixed with coating material such as paint.

### Example 3

4 kg of potassium hydroxide in granular forms, 3 kg of sodium carbonate (soda ash) in granular forms, 8 kg of metal silicon in lump forms, and 32 liters of water were placed into the reaction vessel in that sequence, in which the components were allowed to react. The reaction temperature rose to between 60°C and 90°C, and the reaction was completed four hours. Then, any solids were separated, and 18 liters to 25 liters (about 32 kg) of a fire resistant liquid was obtained.

The separated solids, which remain to be unutilized during the reaction, were mostly metal silicon lumps. Then, additional metal silicon lumps are added to residual metal silicon lumps after cleaning by water, totaling 8 kg, which are to be used in the subsequent (second-time) reaction.

Adding 4 liters of water to the fire resistant liquid thus obtained and stirring them uniformly, and then applying the resultant on a base plate allows the base plate to become a fire resistant building material having the fireproof coating layer.

### Example 4

4.5 kg of potassium hydroxide in powdery forms, 3.5 kg of sodium carbonate (soda ash) in powdery forms, 9 kg of metal silicon in lump forms, and 33 liters of water were placed into the reaction vessel in that sequence, in which the components were allowed to react. The reaction temperature rose to between 70°C and 90°C, and the reaction was completed about four hours. Then, any solids were separated, and 20 liters to 27 liters (about 33 kg) of a fire resistant liquid was obtained.

The separated solids, which remained to be unutilized during the current reaction, were mostly metal silicon lumps. Then, additional metal silicon lumps are added to residual metal silicon lumps after cleaning by water, totaling 9 kg, which are to be used in the subsequent (second-time) reaction.

### Example 5

10 % by weight of fire resistant liquid obtained in Example 1, 80 % by weight of old papers (typically newspapers) cut into pieces, 5 % by weight of chaffs, and 5 % by weight of Chinese cotton were placed into the reaction vessel, where they were mixed well.

The resultant after mixing was pressed until about 45 % by weight of moisture content could be reached. The resultant after pressing was pressure-molded for 60 minutes by hot press at 180°C and then a fire resistant plate (30 cm wide x 30 cm deep x 1.5 cm thick, 2 kg) was obtained. This fire resistant plate had fire resistance, and was light for that size.

### Example 6

10 % by weight of fire resistant liquid obtained in Example 1, 80 % by weight of old papers (typically newspapers) cut into pieces, 5 % by weight of chaffs, and 5 % by weight of Chinese cotton were placed into the reaction vessel where they were mixed well.

The resultant after mixing was boiled for 60 minutes at 110°C to 130°C and then it was allowed to cool down to ambient temperature (typically 20°C). The resultant alter boiling was dehydrated by press until about 45 % by weight of moisture content could be reached. The resultant after dehydrating was pressure-molded for 60 minutes by hot press at 180°C and then a fire resistant plate (30 cm wide x 30 cm deep x 1.5 cm thick, 1.5 kg) was obtained. This fire resistant plate had fire resistance and was light for that size.

Comparing fire resistant plate in Example 6 with one in Example 5, it showed that fire resistant plate in Example 6 was more glossy and better its finish than one in Example 5.

### Example 7

20 % by weight of fire resistant liquid obtained in Example 2 and 80 % by weight of chaffs were placed into the reaction vessel, where they were mixed well.

The resultant after mixing was dehydrated by press until about 40% by weight of moisture content could be reached. The resultant after dehydrating was molded by extrusion as it is known and then a fire resistant bar (1.0 cm diameter x 30 cm long, 0.6 kg) was obtained.

### Example 8

20 % by weight of fire resistant liquid obtained in Example 2 and 80 % by weight of chaffs were placed into the reaction vessel, where they were mixed well.

The resultant after mixing was boiled for 60 minutes at 110°C to 120°C and then it was allowed to cool down to ambient temperature (typically 20°C). The resultant after boiling was dehydrated by press until about 45 % by weight of moisture content could be reached. The resultant after dehydrating was molded by extrusion as it is known and then a fire resistant bar (2.0 cm diameter x 30 cm long, 1.2 kg) was obtained.

### Example 9

25 % by weight of the fire resistant liquid obtained in Example 3 and 75 % by weight of wood chips were placed into the reaction vessel, where they were mixed well.

The resultant after mixing was dehydrated by press until about 45 % by weight of moisture content could be reached. The resultant after dehydrating was pressure-molded for 60 minutes by hot press at 180°C and then a fire resistant column (30 cm long x 2.0 cm wide x 3.0 cm thick, 0.8 kg) was obtained.

### Example 10

25 % by weight of fire resistant liquid obtained in Example 3 and 75 % by weight of wood chips were placed into the reaction vessel, where they were mixed well.

The resultant after mixing was boiled for 60 minutes at 110°C to 120°C and it was allowed to cool down to ambient temperature (typically 20°C). The resultant after boiling was dehydrated by press until about 45 % by weight of moisture content could be reached. The resultant after dehydrating was pressure-molded for 60 minutes by hot press at 180°C, and a fire resistant column (30 cm long x 3.0 cm wide x 3.0 thick, 1.3 kg) was obtained.

### Test Case 1

Samples of the respective fire resistant materials of the present invention that were obtained in Examples 5 through 10 have been tested to check their respective performance in different respects.

Firstly, each respective sample was checked to see how its surface would change when it was exposed to flame of gas burner at 150°C for 30 minutes. At the time that 10 minutes later, every sample was found to have its surface turned into ceramic layer. After 30 minutes later, each sample was cut in order to check interior of each sample. It was found that for all of samples, ceramic layer was formed and progressed into a depth of about 0.8 mm at the side exposed to the gas burner. In the samples of Examples 5 and 6, it was also found that fire did not reach the opposite side through the 1.5 cm thickness plate.

The samples of Examples 5 and 6 were placed on the floor, and a golf ball was left to drop from 80 cm above the samples. Upon hitting them, the golf ball did not bounced. This demonstrates that these samples in the present invention are capable of absorbing shocks.

The sample of Example 5 was used to make a box, inside which a radio set was placed with its switch on. No sound from the radio set was heard outside the box. This demonstrates that it is capable of insulating sound.

Each respective sample of Examples 5 through 10 was checked to see its workability. For this purpose, a nail was driven into each sample, a screw was screwed into each sample, and each sample was cut saw or knife. The results show that looseness of nail after driving did not occurred and screw was secured in all samples.

When each sample was cut saw or knife, it showed good workability in all cases. Thus, the samples of Examples 5 through 10 according to the present invention could be easy processed a chassis for refrigerators and television sets, packages as substitutes for the conventional thick corrugated cardboard and styrene foam, members for desks and chairs, and various types of house building materials.

### Example 11

50 % by weight of fire resistant liquid obtained in Example 2 and 50 % by weight of sawdust and/or chaffs were placed into the reaction vessel where they were mixed uniformly. The resultant after mixing was pressure-molded by hot press at 180°C to 200°C and then a fire resistant plate of 10 mm thickness was obtained. Although this fire resistant plate was exposed to the fine of gas burner (1000°C) for 30 minutes, it did not burn. It was found that the fire resistant plate containing chaffs (chaffs and sawdust or chaffs alone) had its surface vitrified.

### Example 12

40 % by weight of the fire resistant liquid obtained in Example 2, 45 % by weight of bentonite and 15 % by weight of Chinese cotton were placed into the reaction vessel where they were mixed and stirred uniformly. The resulting viscous liquid mixture was applied on a 10 mm thickness plate until a coating layer of up to 2.5 mm thickness was formed. The plate after coating was allowed to dry, and a fire resistant plate was obtained. Although the coating side of this fire resistant plate was exposed to the flame of gas burner (1000°C), it did not burn for 5 minutes.

### Example 13

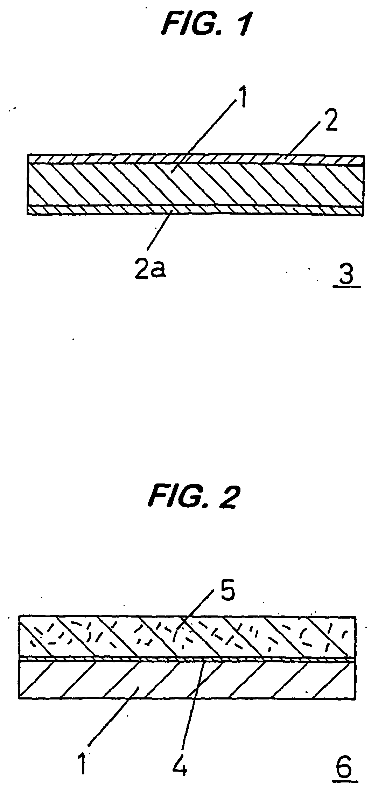

The fire resistant liquid obtained in Example 2 was mixed with a commercial paint. The resultant after mixing was applied on both top and bottom sides of 10 mm thickness plate. A coating layer of 2 to 3 mm thickness 2, 2a was formed on each of top and bottom sides. A fireproof building material 3 was thus obtained (Fig. 1).

Although this fireproof building material was exposed to the flame of gas burner (1000°C), it remained unburned for 3 minutes.

To compare with it, a 10 mm thickness plate having no such coating layer was tested under the same condition, it burned in 3 seconds.

### Example 14

The fire resistant liquid obtained in Example 2 is used, in which 60 % by weight of said fire resistant liquid, 1.0 % by weight of Chinese cotton, 30 % by weight of bentonite, and 9 % by weight of BENGEL 31 were mixed and stirred, resulting in a fire resistant adhesive. This fire resistant adhesive was applied on the upper surface of a 10 mm thickness wood plate 1, thereby forming a fireproof coating layer 4 of 2.5 mm thickness. A 10 mm thickness metal cotton plate (blanket) 5 (commercially available from Shin-Nittetsu Co., Ltd or Isoright Co., Ltd, both Japan) was placed on the fireproof layer coated wood plate 1 and bonded to them and then a fireproof building material 6 was obtained (Fig. 2).

When this fireproof building material 6 was exposed to the flame of gas burner (1000°C), the part of metal cotton became red hot in 2 minutes, but wood plate remained unburned after 30 minutes.

### Example 15

4 liters of fire resistant liquid obtained in Example 2, 40 g of Chinese cotton and 80 g of BENGEL 31 acting as a thickener were mixed and stirred uniformly and then 8 kg to 10 kg of a fire resistant adhesive was obtained.

### Example 16

4 liters of fire resistant liquid obtained in Example 2, 2.5 kg of bentonite, 40 g of Chinese cotton, 80 g of BENGEL 31, 4 g of graphite and 2 g of carbon fiber were mixed and stirred uniformly and then 8 kg to 8.5 kg of a fire resistant joint sealant was obtained.

Although the present invention has been described with reference to the particular preferred embodiments, it should be understood that various changes and modifications may be made without departing from the scope and spirit of the invention as defined in the appended claims.

## Claims

1. A fire resistant liquid comprising:
potassium hydroxide, sodium carbonate (soda ash), metal silicon and water, wherein said fire resistant liquid is obtained by allowing said potassium hydroxide, sodium carbonate (soda ash), metal silicon and water to react.

2. A process for producing a fire resistant liquid comprising potassium hydroxide, sodium carbonate (soda ash), metal silicon and water, wherein said process includes:
allowing said potassium hydroxide, sodium carbonate (soda ash), metal silicon and water to react, thereby producing said fire resistant liquid.

3. A fire resistant material comprising:
a fire resistant liquid obtained by allowing potassium hydroxide, sodium carbonate (soda ash), metal silicon and water to react; and
one or more of papers, chaffs, fibrous materials, wood chips and sawdust added to said fire resistant liquid, wherein said fire resistant material is obtained by mixing said fire resisting liquid together with said one or more of papers, chaffs, fibrous materials, wood chips and sawdust to form a uniform mixture, and by pressure-molding said mixture after any water or moisture is removed from said mixture.

4. A fireproof building material comprising:
a fire resistant liquid obtained by allowing potassium hydroxide, sodium carbonate (soda ash), metal silicon and water to react; and
vegetable particles added to said fire resistant liquid, wherein said fireproof building material is obtained by mixing said fire resistant liquid together with said vegetable particles to form a uniform mixture, and by pressure-molding said mixture.

5. A fireproof building material comprising:
a fire resistant liquid obtained by allowing potassium hydroxide, sodium carbonate (soda ash), metal silicon and water to react; and
bentonite and fibers added to said fire resistant liquid, wherein said fireproof building material is obtained by mixing said fire resistant liquid together with said bentonite and fibers to form a viscous liquid mixture, and by applying a coating of said viscous liquid mixture on one or both of the opposite sides of a wood, paper, metal, or composite board.

6. A fireproof building material comprising:
a fire resistant liquid obtained by allowing potassium hydroxide, sodium carbonate (soda ash), metal silicon and water to react, wherein said fireproof building material is obtained by applying a coating of said fire resistant liquid on one or both of the opposite sides of a base plate.

7. The fireproof building material as defined in Claim 6, wherein said base plate includes a paper board, wood board, glass board, metal board, or concrete board.

8. A fireproof building material comprising:
a fire resistant liquid obtained by allowing potassium hydroxide, sodium carbonate (soda ash), metal silicon and water to react; and
bentonite and Chinese cotton added to said fire resistant liquid, wherein said fireproof building material is obtained by bonding an incombustible cotton plate to a base plate through the intermediary of said mixture.

9. The fireproof building material as defined in Claim 8, wherein said base plate includes a paper board, wood board, glass board, metal board, or concrete board.

10. The fireproof building material as defined in Claim 8, wherein said incombustible cotton plate includes a stainless steel cotton board, ceramic cotton board, or concrete board.

11. A fire resistant adhesive comprising:
a fire resistant liquid obtained by allowing potassium hydroxide, sodium carbonate (soda ash), metal silicon and water to react; and
bentonite, Chinese cotton and BENGEL 31 added to said fire resistant liquid, wherein said fire resistant adhesive is obtained by mixing and stirring said fire resistant liquid and the components just listed above.

12. A fire resistant adhesive comprising;
a fire resistant liquid obtained by allowing potassium hydroxide, sodium carbonate (soda ash), metal silicon and water to react; and
bentonite, Chinese cotton and BENGEL 31 added to said fire resistant liquid, wherein said fire resistant adhesive is obtained by mixing and stirring said fire resistant liquid, and 50 % to 70 % by weight of said bentonite, 0.5 % to 1.5 % by weight of said Chinese cotton and 1.0 % to 2.5 % by weight of BENGEL 31, respectively, in relation to said fire resistant liquid.

13. A fire resistant adhesive comprising;
a fire resistant liquid obtained by allowing potassium hydroxide, sodium carbonate (soda ash), metal silicon and water to react; and
bentonite, Chinese cotton, BENGEL 31, graphite and carbon fibers added to said fire resistant liquid, wherein said fire resistant adhesive is obtained by mixing and stirring said fire resistant liquid, and 50 % to 70 % by weight of said bentonite, 0.5 % to 1.5 % by weight of said Chinese cotton, 1.0 % to 2.5 % by weight of said BENGEL 31, 0.1 % to 0.3 % by weight of said graphite and 0.05 % to 0.1 % by weight of said carbon fibers, respectively, in relation to said fire resistant liquid.
